# EUROPEAN PATENT APPLICATION

(11) **EP 1 734 199 A1**
(43) Date of publication of application: **20.12.2006**
(21) Application number: 05721211.0
(22) Date of filing: 15.03.2005
(51) Int. Cl.: E04B 2/86, E04B 1/76

(54) **HEAT INSULATION PANEL SERVING ALSO AS MOLD FORM, AND OUTER HEAT INSULATION STRUCTURE**

(30) Priority: 15.03.2004 JP 2004072605
(71) Applicant: SHINNIHON CORPORATION, Chiba-shi Chiba 2610021 (JP)
(72) Inventor: KANETSUNA, Kazuo, c/o Shinnihon Corporation, Chiba-shi, Chiba, 2610021 (JP)
(74) Representative: Godwin, Edgar James
(86) International application number: PCT/JP2005/005061
(87) International publication number: WO 2005/088022

(57) **Abstract**

A heat insulation panel (2) and a reinforcing panel (3) made of plastic material or the like are disposed in superposed relation on the outer side of a wall body (1) of RC construction. A mesh sheet (4) is installed as a base material on the outside of the reinforcing panel (3). And, tiles (5) serving as external cladding are bonded to the outside of the mesh sheet (4). The heat insulation panel (2) is formed of phenol foam or the like molded, e.g., in the form of a rectangular plate, while the reinforcing panel (3) is formed of acrylic plate, vinyl chloride plate or the like, and a number of groove-like air passage sections (3a) are continuously formed in a vertical direction on the inside of the reinforcing panel, i.e., on the side opposed to the heat insulation panel (2). The reinforcing panel (3) and heat insulation panel (2) are integrated in advance as by adhesive bonding. Such arrangement makes it possible to build an RC structure of heat-insulation construction which is superior in heat insulation, constructibility, and economical efficiency.

## Description

### TECHNICAL FIELD

This invention relates to a heat insulation panel serving also as a mold form and an outer heat insulation structure, and more particularly, is that adaptable to provide an outer wall of RC construction which is superior in constructibility, air ventilation and economical efficiency.

### BACKGROUND ART

When a heat insulation structure is required for a building of RC construction, inner heat insulation to install a heat insulation material such as urethane foam on the inside of the building has been adopted as one general approach up to now. However, in recent years, there have been pointed out such problems that the inner heat insulation allows outdoor cold air carried through concrete and indoor warm air to be both taken in the heat insulation material, so that an in-wall dew condensation occurs depending on a difference in temperature between the outdoor cold air and the indoor warm air, leading to not only degradation of heat insulation effects, but also propagation of molds or the like that will give damages to one's health.

Further, there have been also pointed out such different problems that portions such as a scrambled portion of an outer wall with a floor slab and/or a partition wall go into so-called heat bridges that cause a dew condensation at the inside, leading to a waste of energy.

In this connection, in recent years, outer heat insulation to cover the whole building with the heat insulation material by mounting the heat insulation material to the outside of a concrete frame body has been being adopted in particular from the viewpoints of prevention of the inside of the wall from the dew condensation and demands for energy saving at the time of air conditioning or the like.

The outer heat insulation is not only quite superior as measures to prevent the inside of the wall from the dew condensation and/or to save energy at the time of air conditioning, but also provides advantages that the concrete frame body makes no direct contact with the outside air, and is thus not required to cause expansion and shrinkage by heat, permitting the strength unique to the concrete to be maintained, leading to enhancement of building durability.

Referring to the prior arts, there are the inventions described in publications as follows.
(1) Japanese Patent Laid-open Publication 2000-345679
(2) Japanese Patent Laid-open Publication 2000-345680
(3) Japanese Patent Laid-open Publication 2003-301546
(4) Japanese Patent Laid-open Publication 2003-027618

However, the outer heat insulation up to now is generally of a structure as much as that provided by simply bonding an inorganic or fibrous heat insulation material to the outdoor side of the concrete frame body, and is thus not always admitted to be perfect as the measures to prevent the inside of the wall from the dew condensation. Accordingly, when the dew condensation occurs in the heat insulation material, the heat insulation material absorbs drops of dew, and as a result, is turned into a water retention material rather than the heat insulation material, leading to problems such as remarkable degradation of the heat insulation effects.

Alternatively, one attempt has been also made to take measures to prevent the inside of the wall from the dew condensation by providing an air passage layer between the heat insulation material and external cladding installed on the upper side of the heat insulation material. However, the air passage layer in this case is supposed to be secured, for instance, by such means as to mount the external cladding to support fittings projecting in a cantilever manner from the frame body through the heat insulation material, resulting in a need for much labors and also a comparative increase in cost with use of the fittings or the like.

Further, in execution of works, it is necessary to build up a mold form, then install the heat insulation material on the inside of the mold form, and remove the mold form after placing the concrete, leading to complicated execution of works and prolongation in term of works as inevitable results.

It is to be noted that a method of using, as a sheathing board, a material that is given a strength by bonding a cement board to the heat insulation material is also well known. However, this method not only requires high cost for manufacturing, but also is inferior in constructibility, and besides, results in quite difficulty in surely providing the required air passage layer over the whole surface of the concrete frame body.

The present invention has been undertaken to solve the above problems, and is intended to provide a heat insulation panel serving also as a mold form and an outer heat insulation structure that are both particularly superior in constructibility, heat insulation and economical efficiency.

### DISCLOSURE OF THE INVENTION

A heat insulation panel serving also as a mold form according to Claim 1 relates to a heat insulation panel serving also as a placing mold form for a concrete wall body, and is characterized in that a plastic reinforcing panel having a number of groove- or hole-like air passage sections permitting communication in an in-plane direction is integrated with at least one surface of a heat insulation material molded in the form of a panel.

The present invention is configured by integrally mounting the plastic reinforcing panel to at least one surface of the heat insulation material molded in the form of the panel, so that quite high stiffness is obtained to ensure that use as a substitute for a sheathing board plywood is attainable, permitting contributions toward achievement of resource recycling and saving of wood material resources or the like.

Further, the reinforcing panel may be easily molded together with the groove- or hole-like air passage sections in an extrusion molding manner, and the reinforcing panel and the heat insulation material may be bonded into an integral structure using a method such as adhesive bonding, so that there are also a number of advantages of being easy to manufacture, and besides, being very light in weight to ensure that on-site work is also easily executable. It is to be noted that the groove-like air passage sections also include clearances formed by reason that the panel surface takes the form of irregularities.

The heat insulation material in this case preferably requires use of materials having high heat insulation with no water absorbability, and may include phenol foam, styro foam, hard urethane foam, and calcium carbonate foam or the like, for instance. In turn, the reinforcing panel may involve use of an acrylic plate, a vinyl chloride plate and a polycarbonate plate or the like.

It is to be noted that while the air passage sections of the reinforcing panel preferably need to be formed continuously in a vertical direction, a limitation is not particularly imposed on the vertical direction, and it is also allowable to form the air passage sections continuously in either a transverse direction or an upward or downward oblique direction, permitting setting of the direction to be properly given.

The heat insulation panel serving also as the mold form according to Claim 2 is characterized in that, in the heat insulation panel serving also as the mold form according to Claim 1, the heat insulation material is in the form of a flame-resistant or incombustible panel made of resin foam.

The heat insulation panel serving also as the mold form according to Claim 3 is characterized in that, in the heat insulation panel serving also as the mold form according to Claim 2, the resin foam includes a phenol resin foam material.

The heat insulation panel serving also as the mold form according to Claim 4 is characterized in that, in the heat insulation panel serving also as the mold form according to Claim 2, the heat insulation material includes an inorganic material.

An outer heat insulation structure according to 5 is characterized in that a heat insulation panel serving also as a mold form provided by integrating a plastic reinforcing panel having a number of groove- or hole-like air passage sections with at least one surface of a heat insulation material molded in the form of a panel is disposed on the outside of a concrete wall body, before external finish is given to an outer surface of the heat insulation panel

The present invention is provided by integrally mounting the reinforcing panel to at least one surface of the heat insulation material molded in the form of the panel, then installing an integral unit of the reinforcing panel and the heat insulation material as the sheathing board of the concrete mold form, and further, using this integral unit as a base material of the external cladding such as tile hanging without removal of the reinforcing panel, thereby making it possible to build up the mold form at the same time as mounting of the heat insulation material, permitting contributions toward achievement of substantial laborsaving in works of building up and dismantling the mold form and substantial reduction in term of works.

On one hand, it is also allowable to directly give the external finish by spraying mortar on or bonding tiles to the surface of the reinforcing panel. In this case, however, use of one manner of additionally covering the surface of the reinforcing panel with a mesh material consisting of glass fibers and/or aramide fibers or wire netting, or alternatively, giving surface roughening directly to the surface of the reinforcing panel is adaptable to provide higher bond strength of the mortar and/or a bonding material, permitting the external cladding to be firmly mounted.

Further, the plastic reinforcing panel is provided with the groove-or hole-like air passage layer sections, so that indoor vapor having permeated into the frame body is rapidly discharged through the air passage layer after passing through the heat insulation material, permitting prevention of the inside of the wall from the dew condensation. In addition, water such as rainwater leaking from the outside, if occurs, may be also rapidly discharged through the air passage layer, permitting the inside of the wall to be kept in a dried state at all times.

By the way, the external cladding, when being exposed to severe natural environments in summer and winter, repeatedly causes expansion and shrinkage depending on a temperature difference, leading to problems such as thermal expansion with frost damage and warps. However, the outside air is allowed to flow through the air passage layer on the inside of the external cladding at all times to ensure that a temperature change of the external cladding is controllable, thereby eliminating the above problems, resulting in remarkable enhancement of external cladding durability.

Further, the temperature change at the inside of the wall is also controlled, so that the concrete frame body is not required to cause the expansion and shrinkage by heat, permitting the strength unique to the concrete to be maintained, resulting in enhancement of building durability.

The heat insulation panel serving also as the mold form according to the present invention is configured by integrally mounting the plastic reinforcing panel to at least one surface of the heat insulation material molded in the form of the panel, so that quite high stiffness is obtained to ensure that use as the substitute for the sheathing board plywood for the concrete mold form is attainable, thereby providing effects of permitting contributions toward achievement of resource recycling and saving of wood material resources or the like.

Further, the outer heat insulation structure according to the present invention is provided by integrally mounting the reinforcing panel to at least one surface of the heat insulation material molded in the form of the panel, then installing the integral unit of the reinforcing panel and the heat insulation material as the sheathing board of the concrete mold form, and further, using this integral unit as the base material of the external cladding such as tile hanging without removal of the reinforcing panel, thereby making it possible to build up the mold form at the same time as mounting of the heat insulation material, permitting contributions particularly toward achievement of substantial laborsaving in the works of building up and dismantling the mold form and substantial reduction in term of works or the like.

Furthermore, use of a double heat insulation structure composed of a heat insulation material body and the groove- or hole-like air passage sections ensures superior heat insulation, and besides, provides high energy saving effects.

### BRIEF DESCRIPTION OF THE DRAWINGS

FIG. 1 is a transverse sectional view showing one embodiment of a RC wall of outer heat insulation structure according to the present invention;
FIG. 2 is a transverse sectional view showing a different embodiment;
FIG. 3 is a perspective view showing a heat insulation panel in the embodiment shown in FIG. 1;
FIG. 4 is an exploded perspective view corresponding to FIG. 3;
FIG. 5 is a perspective view showing one instance of a different heat insulation panel;
FIG. 6 is a plan view showing a concrete mold form;
FIG. 7 is a front view corresponding to FIG. 6;
FIG. 8 is a side view corresponding to FIG. 6;
FIG. 9 is a plan view, on an enlarged scale, of a portion X shown in FIG. 6; and
FIG. 10 is an exploded plan view corresponding to FIG. 9.

### BEST MODE FOR CARRYING OUT THE INVENTION

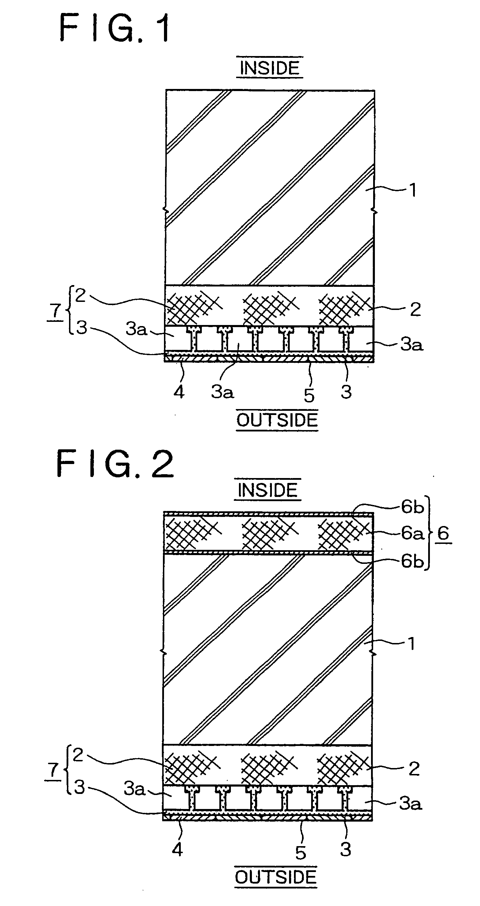

FIGS. 1, 3 and 4 show one embodiment of a RC construction wall involving use of a heat insulation panel serving also as a mold form according to the present invention. Referring to FIGS. 1, 3 and 4, a heat insulation panel 2 and a plastic reinforcing panel 3 are disposed in superposed relation in order on the outside (which will be hereinafter referred to as "an outdoor side") of a wall body 1 of RC construction, and a mesh sheet 4 is installed as a base material on the outdoor side of the reinforcing panel 3. And, tiles 5 serving as external cladding are bonded to the outdoor side of the mesh sheet 4.

The heat insulation panel 2 is formed of an inorganic heat insulation material, and involves use of phenol foam, styro foam, urethane foam, and calcium carbonate foam plate that are all molded in the form of a rectangular plate, for instance.

The reinforcing panel 3 is formed of an acrylic plate, a vinyl chloride plate, a polycarbonate plate or the like, and has a number of groove-like air passage sections 3a continuously formed in parallel in a vertical direction on the indoor side of the reinforcing panel, or on the side opposed to the heat insulation panel 2. It is to be noted that the reinforcing panel 3 is molded together with a number of air passage sections 3a in an extraction molding manner, and is also integrated in advance with the heat insulation panel 2 as by adhesive bonding.

The mesh sheet 4 is installed for the purpose of providing higher bond strength of mortar adapted to bond the tiles 5 to the reinforcing panel 3, and requires use of wire netting and/or mesh materials consisting of glass fibers.

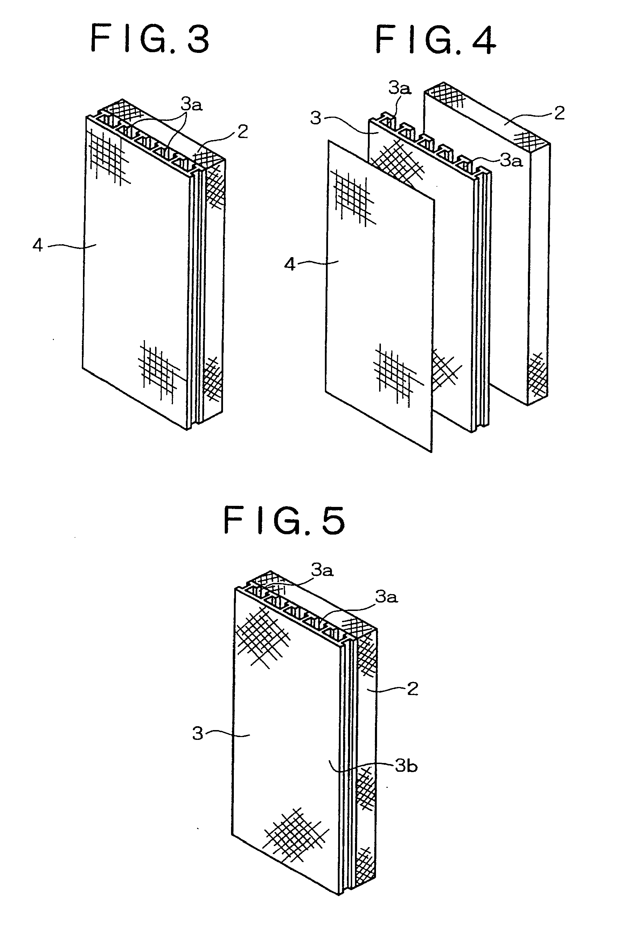

The tiles 5 are bonded to the outer surface of the reinforcing panel 3 to cover the mesh sheet 4 in the manner of tile hanging with application of pressure using the mortar as an adhesive. It is to be noted that FIG. 5 is a view showing one instance where the higher bond strength of the above mortar is obtained by forming an outer surface 3b of the reinforcing panel 3 into the shape of a rough surface. According to this instance, use of the mesh sheet 4 may be eliminated.

FIG. 2 shows a different embodiment of the present invention, wherein a heat insulation panel 6 serving also as a mold form is mounted to the inside (which will be hereinafter referred to as "an indoor side") of the RC wall 1 that is in the form of the outer heat insulation wall having been described in the embodiment shown in FIG. 1. The heat insulation panel 6 serving also as the mold form in this case is so formed as to provide flexural strength adaptable to stand concrete-placing pressure by bonding reinforcing fiber sheets 6b and 6b to the opposite surfaces of a heat insulation panel 6a of a required thickness.

The heat insulation panel 6a in this case involves use of a panel formed of a phenol resin foam material or the like to be thick as required, for instance, while the reinforcing fiber sheet 6b involves use of a mesh sheet consisting of glass fibers or the like.

Particularly, the opposite surfaces of the heat insulation panel 6a are given reinforcement with the reinforcing fiber sheets 6b and 6b, so that a quite high performance of flexure particularly against the concrete-placing pressure is obtained. Further, the surface is covered with the reinforcing fiber sheet 6b by bonding, so that high bond strength of the mortar is obtained, permitting the tiles to be also bonded surely in the manner of tile hanging with application of pressure.

In the above configuration, indoor vapor having permeated into the wall body 1 of RC construction, for instance, is rapidly discharged through the air passage sections 3a after passing through the heat insulation panel 2, permitting prevention of the inside of the wall from the dew condensation. Further, water such as rainwater leaking from the outside through the external cladding (the tiles 5), if occurs, may be also rapidly discharged through the air passage sections 3a. Thus, it is possible to keep the inside of the wall in a dried state at all times, permitting prevention of residents from being given damages to one's health due to propagation of molds or the like.

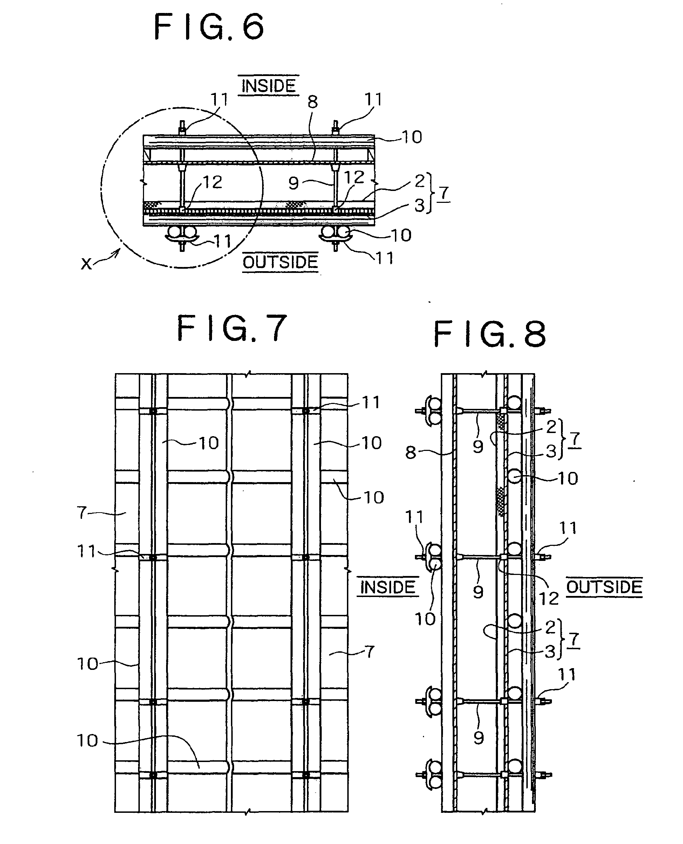

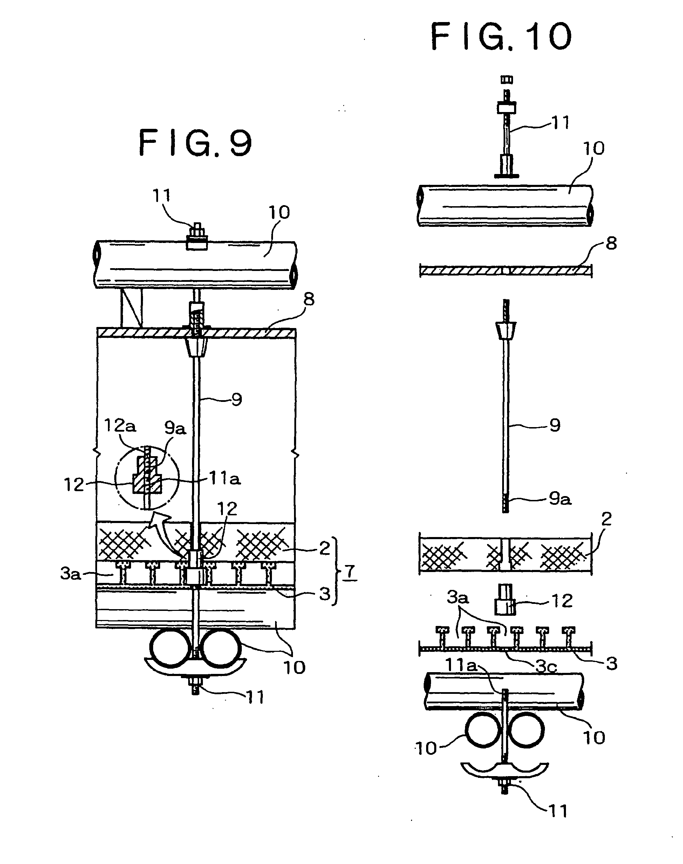

FIGS. 6 to 10 show a concrete mold form built up using, as a sheathing board, the heat insulation panel serving also as the mold form according to the present invention, in which case, a heat insulation panel 7 serving also as the mold form provided by integrating the heat insulation panel 2 and the reinforcing panel 3 together in advance is built on the outdoor side, while a conventionally-available sheathing board 8 formed of plywood is built on the indoor side.

Further, more than one separator 8 is interposed at prescribed intervals between the heat insulation panel 7 serving also as the mold form and the sheathing board 8, and batter materials 10 formed of steel pipes are respectively attached to the outside of the heat insulation panel 7 serving also as the mold form and the sheathing board 8. Then, the heat insulation panel 7 serving also as the mold form, the sheathing board 8 and each batter material 10 are firmly fixed together with more than one form tie bolt 11.

Specifically, each separator 9 has a separator cone 12 mounted to the side of the heat insulation panel 7 serving also as the mold form, and this separator cone 12 has a tapped hole 12a adapted for connection of one end 9a of each separator 9 and a tip end 11a of each form tie bolt together by screwing, and is mounted to the inside of the air passage sections 3a included in the reinforcing panel 3. Further, the tip end 11a of each form tie bolt 11 at the side of the heat insulation panel 7 serving also as the mold form is connected to the tapped hole 12a of the separator cone 12 by screwing, after passing through each reinforcing panel 3.

With the configuration as described the above, there is no possibility that one end of the separator 9 projects from the surface of the reinforcing panel 3 after detachment of each form tie bolt 11 for removal of the mold form, permitting subsequent works such as mounting of the external cladding (or the tiles 5, for instance) to be executed smoothly.

It is to be noted that while a hole 3c having been used for insertion of the tip end 11a of each form tie bolt 11 is left behind in the surface of the reinforcing panel 3, it is allowable to easily fill or cover this hole with the mortar or a cap or the like.

### INDUSTRIAL APPLICABILITY

The present invention may be applied to build the RC construction wall of heat insulation structure that is particularly superior in heat insulation, constructibility and economical efficiency.

## Claims

1. In a heat insulation panel serving also as a placing mold form for a concrete wall body, a heat insulation panel serving also as a mold form, **characterized in that** a plastic reinforcing panel having a number of groove- or hole-like air passage sections permitting communication in an in-plane direction is integrated with at least one surface of a heat insulation material molded in the form of a panel.

2. The heat insulation panel serving also as the mold form according to claim 1, wherein said heat insulation material is in the form of a flame-resistant or incombustible panel made of resin foam.

3. The heat insulation panel serving also as the mold form according to claim 2, wherein said resin foam includes a phenol resin foam material.

4. The heat insulation panel serving also as the mold form according to claim 1, wherein said heat insulation material includes an inorganic material.

5. An outer heat insulation wall structure **characterized in that** a heat insulation panel serving also as a mold form provided by integrating a plastic reinforcing panel having a number of groove- or hole-like air passage sections with at least one surface of a heat insulation material molded in the form of a panel is disposed on the outside of a concrete wall body, before external finish is given to an outer surface of said heat insulation panel.
